# FASCICULE DE BREVET EUROPEEN

(11) **EP 3 808 060 B1**
(45) Date de publication et mention de la délivrance du brevet: **18.02.2026**
(21) Numéro de dépôt: 19737834.2
(22) Date de dépôt: 28.05.2019
(51) Int. Cl.: H04M 1/253, H04L 65/1104, H04W 12/06, H04L 65/1069

(54) **TRAITEMENT DE MESSAGES DANS UN RÉSEAU DE VOIX SUR IP**
NACHRICHTENVERARBEITUNG IN EINEM VOICE-OVER-IP-NETZ
PROCESSING MESSAGES IN A VOICE OVER IP NETWORK

(30) Priorité: 13.06.2018 FR 1855184
(43) Date de publication de la demande: 21.04.2021
(73) Titulaire: Orange, 92130 Issy-les-Moulineaux (FR)
(72) Inventeur: FOUQUET, Stéphane, 92326 Châtillon Cedex (FR); PASCUAL, Juan, 92326 Châtillon Cedex (FR)
(74) Mandataire: Cabinet Beau de Loménie
(86) Numéro de dépôt international: PCT/FR2019/051253
(87) Numéro de publication internationale: WO 2019/239029

(56) Documents cités:
- WO-A1-2019/234325
- US-A1- 2005 180 403
- US-A1- 2008 046 735
- US-A1- 2008 084 870
- US-B1- 6 856 616

## Description

### Arrière-plan de l'invention

L'invention se rapporte au domaine général des télécommunications.

Elle concerne plus particulièrement un procédé permettant le couplage, au niveau d'un réseau de téléphonie, d'un terminal avec une identité téléphonique publique allouée à un utilisateur par le réseau de téléphonie en vue de permettre au terminal d'utiliser cette identité téléphonique publique pour communiquer sur le réseau de téléphonie tout en préservant la sécurité du réseau de voix sur IP.

L'invention a ainsi une application privilégiée mais non limitative dans le contexte de la téléphonie fixe, et notamment de la téléphonie fixe s'appuyant sur la technologie de voix sur IP (ou VoIP pour Voice over IP).

Dans l'état actuel de la technique, en téléphonie fixe (par opposition à la téléphonie mobile), l'opérateur de téléphonie alloue à chaque utilisateur une identité téléphonique publique destinée à être utilisée sur le réseau de téléphonie, puis cette identité téléphonique publique est associée (i.e. couplée) à un terminal dédié de l'utilisateur (par exemple à un téléphone particulier). Ceci permet à l'opérateur de téléphonie, lorsqu'un terminal émet un appel sur son réseau en utilisant une identité téléphonique publique, de vérifier que ce terminal est bien associé à cette identité téléphonique et est bien autorisé à l'utiliser. Tant qu'un terminal n'est pas couplé dans le système d'informations de l'opérateur de téléphonie à une identité téléphonique publique allouée par l'opérateur à un utilisateur, le terminal n'est pas en mesure d'émettre le moindre appel sur le réseau de téléphonie de l'opérateur en utilisant cette identité. Pour l'utilisateur du terminal, cette situation peut s'avérer quelque peu déstabilisante : aucune tonalité n'est émise dans son téléphone quand il le décroche pour émettre un appel, tout au plus, est-il invité à enregistrer son terminal avant toute utilisation préalable sur le réseau de téléphonie.

Pour coupler un terminal à une identité téléphonique publique, le réseau de téléphonie s'appuie sur un identifiant du terminal permettant de l'identifier de manière univoque. Cet identifiant est par exemple dans l'état de la technique un identifiant matériel du terminal, tel qu'une adresse MAC (Medium Access Control) permettant de l'identifier de manière unique. L'accès à cet identifiant matériel par l'opérateur du réseau de téléphonie requiert généralement aujourd'hui l'intervention d'un administrateur, et peut s'avérer long et fastidieux à mettre en œuvre. L'effort à fournir est d'autant plus important dans le contexte actuel de la téléphonie VoIP où un même utilisateur peut être amené à utiliser plusieurs terminaux distincts partageant une même identité téléphonique publique allouée à cet utilisateur. Dans ce contexte, l'administrateur doit intervenir à chaque fois que l'on souhaite attribuer l'identité téléphonique d'un utilisateur à un autre terminal.

Par conséquent, il existe un besoin d'un procédé permettant à un opérateur d'un réseau de téléphonie de voix sur IP de s'assurer facilement du couplage d'un terminal avec une identité téléphonique publique allouée sur son réseau sans pour autant sacrifier la sécurité de l'accès à son réseau.

Le document US 2008/084870 A1 décrit une solution pour enregistrer un terminal parmi une liste d'abonnés d'un fournisseur d'accès à un réseau de voix sur IP de sorte à éviter l'intervention d'un technicien. Le document US 2005/180403 A1 décrit une solution pour découvrir un identifiant matériel d'un téléphone IP et coupler celui-ci avec un identifiant de l'utilisateur du téléphone IP. Enfin, le document WO 2019/234325 A1, publié le 12.12.2019, décrit une solution pour collecter les identifiants matériels de terminaux d'utilisateurs d'un réseau de téléphonie de voix sur IP et les coupler avec les identités téléphoniques allouées à ces utilisateurs.

### Objet et résumé de l'invention

L'invention est telle que décrite dans les revendications indépendantes 1, 8 à 11 et 13, les formes préférées étant décrites dans les revendications dépendantes 2 à 7, 10, 12 et 14. L'invention répond notamment à ce besoin en proposant un procédé de traitement de messages par un dispositif d'un réseau de voix sur IP d'un opérateur, comprenant, suite à une réception d'un message d'initiation d'un appel de voix sur IP en provenance d'un terminal de voix sur IP:
- une étape de détermination si le message reçu contient une identité téléphonique publique allouée à un utilisateur du terminal par l'opérateur du réseau de voix sur IP ;
- si le message contient une dite identité téléphonique publique, une étape de déclenchement d'un établissement de l'appel de voix sur IP avec un destinataire du message reçu suite à une authentification positive du terminal ;
- sinon :
   ∘ une étape d'établissement d'un canal de voix sur IP entre le terminal et un serveur vocal hébergé par le dispositif du réseau de voix sur IP ;
   ∘ une étape d'obtention par le serveur vocal via ce canal d'un code d'authentification de l'utilisateur du terminal ;
   ∘ si le code d'authentification obtenu est associé au niveau du réseau de voix sur IP à une identité téléphonique publique allouée par l'opérateur du réseau de voix sur IP à l'utilisateur du terminal, une étape de
      fourniture au terminal de l'identité téléphonique publique et d'une donnée d'authentification associée au niveau du réseau de voix sur IP à cette identité téléphonique publique pour émettre des appels de voix sur IP et s'authentifier auprès du réseau de voix sur IP.

Corrélativement, l'invention concerne également un dispositif d'un réseau de voix sur IP hébergeant un serveur vocal et comprenant des modules activés sur réception par le dispositif d'un message d'initiation d'un appel de voix sur IP en provenance d'un terminal de voix sur IP, ces modules comprenant :
- un module de détermination, configuré pour déterminer si le message reçu contient une identité téléphonique publique allouée à un utilisateur du terminal par l'opérateur du réseau de voix sur IP ;
- un module de déclenchement, configuré pour déclencher un établissement de l'appel de voix sur IP avec un destinataire du message reçu si le module de détermination détermine que le message reçu contient une dite identité téléphonique publique ;
- des modules, activés sinon, comprenant :
   ∘ un module d'établissement, configuré pour établir un canal de voix sur IP entre le terminal et le serveur vocal ;
   ∘ un module d'obtention, configuré pour obtenir via ce canal, un code d'authentification de l'utilisateur du terminal ; et
   o un module de fourniture, activé si le code d'authentification obtenu est associé au niveau du réseau de voix sur IP à une identité téléphonique publique allouée par l'opérateur du réseau voix sur IP à l'utilisateur du terminal, et configuré pour fournir au terminal cette identité téléphonique publique et une donnée d'authentification associée au niveau du réseau de voix sur IP à l'identité téléphonique publique pour émettre des appels de voix sur IP et s'authentifier auprès du réseau de voix sur IP.

L'invention offre ainsi un procédé simple et automatisé pour coupler dynamiquement des terminaux d'utilisateurs d'un réseau de téléphonie de voix sur IP avec les identités téléphoniques allouées à ces utilisateurs par le réseau. Par couplage, on entend ici qu'on associe un terminal à une identité téléphonique publique allouée par le réseau de voix sur IP à un utilisateur, et que celui-ci peut l'utiliser avec l'autorisation du réseau de voix sur IP sans compromettre la sécurité du réseau. On note que conformément à l'invention, ce couplage ne s'appuie pas, contrairement à l'état de la technique, sur le stockage dans une base de données du réseau de voix sur IP d'un identifiant caractérisant de manière unique le terminal (ex. identifiant matériel) en association avec une identité téléphonique publique allouée par le réseau, mais il est réalisé par l'intermédiaire de la fourniture au terminal par le réseau de voix sur IP de l'identité téléphonique publique qu'il a le droit d'utiliser et d'une donnée d'authentification associée à cette identité au niveau du réseau. Cette fourniture est conditionnée par une authentification de l'utilisateur du terminal par l'intermédiaire d'un serveur vocal.

Conformément à l'invention, l'utilisation d'une identité publique téléphonique allouée par le réseau de voix sur IP par le terminal n'est possible qu'après une authentification positive de l'utilisateur du terminal doublée d'une authentification du terminal au moyen des informations fournies par le réseau de voix sur IP. L'utilisation par le terminal de l'identité téléphonique publique que lui a transmise le réseau prouve donc que celui-ci est couplé de façon sécurisée à une identité téléphonique attribuée par le réseau de voix sur IP, et qu'il est autorisé à passer des appels sur le réseau de voix sur IP.

Le couplage proposé par l'invention est réalisé avantageusement par un dispositif du réseau de voix sur IP par lequel transite le message d'initiation d'appel émis par le terminal et qui est configuré, conformément à l'invention, pour envoyer au terminal une identité téléphonique publique qu'il peut utiliser pour passer des appels de voix sur IP uniquement lorsque l'utilisateur du terminal fournit un code d'authentification dûment reconnu par le réseau de voix sur IP et correspondant à une identité téléphonique publique allouée à un utilisateur par celui-ci. Un tel dispositif peut être un dispositif dédié à cet effet (tel qu'un serveur d'application déclenché sur réception d'un message d'initiation d'appel sur le réseau de voix sur IP en provenance d'un terminal) ou un serveur proxy hébergé par un équipement de bordure comme par exemple un contrôleur SBC (Session Border Controller). Ce serveur proxy est par exemple dans le contexte d'un réseau de voix sur IP utilisant le protocole SIP, un proxy SIP ou un agent utilisateur « dos-à-dos » plus communément désigné par back-to-back user agent ou B2BUA.

Conformément à l'invention, c'est donc le réseau de voix sur IP qui fournit lui-même au terminal l'identité téléphonique publique que celui-ci doit utiliser pour communiquer sur le réseau de voix sur IP ainsi que la donnée d'authentification lui permettant de s'authentifier sur le réseau de voix sur IP. Cette procédure, qui est réalisée dans le cadre du premier appel passé par le terminal via le réseau de voix sur IP, permet de sécuriser le couplage du terminal à une identité téléphonique publique du réseau de voix sur IP. Bien entendu, préférentiellement, l'identité téléphonique publique et la donnée d'authentification sont fournies par le dispositif du réseau de voix sur IP au terminal de manière sécurisée (par exemple via un lien sécurisé, de manière chiffrée, etc.).

La solution proposée par l'invention s'appuie donc sur un couplage des terminaux à des identités téléphoniques publiques orchestré par le réseau de voix sur IP lui-même, après avoir effectué diverses vérifications permettant d'authentifier l'utilisateur du terminal et le terminal lui-même. L'invention garantit la sécurité du couplage en instaurant un double niveau d'authentification : un premier niveau d'authentification « vocale » assuré par la fourniture du code d'authentification par l'utilisateur du terminal au serveur vocal, et un deuxième niveau d'authentification « logiciel » assuré par la fourniture par le terminal d'une donnée d'authentification qu'il a reçue avec l'identité téléphonique publique du réseau de voix sur IP. Ceci permet de garantir la sécurité et l'intégrité du couplage, et de se prémunir efficacement contre les tentatives d'usurpation d'identité téléphonique sur le réseau de voix sur IP.

L'invention a une application privilégiée mais non limitative lorsque l'opérateur du réseau de téléphonie de voix sur IP est distinct de l'opérateur qui fournit à l'utilisateur du terminal l'accès réseau lui permettant de se connecter au réseau de téléphonie de voix sur IP (typiquement l'opérateur qui fournit à l'utilisateur du terminal la passerelle ou la « box » lui permettant d'accéder à des réseaux externes, tels que le réseau public Internet).

Le procédé proposé par l'invention permet avantageusement de s'affranchir de l'intervention d'un administrateur pour coupler les terminaux des utilisateurs à des identités téléphoniques sur le réseau de voix sur IP, et facilite donc l'opération de couplage en cas de changement de terminal par un utilisateur. L'invention est par conséquent particulièrement bien adaptée dans le contexte de la téléphonie sur IP dans lequel l'utilisation de multiples terminaux associée à une même identité téléphonique publique est rendue possible et courante. Elle a en outre un intérêt privilégié dans les environnements dynamiques où les terminaux sont amenés à être remplacés souvent ou de nouveaux terminaux sont susceptibles d'être ajoutés (ex. extension du parc de terminaux d'une entreprise, etc.).

Par ailleurs, le procédé proposé par l'invention est très simple à mettre en œuvre et sécurisé comme mentionné précédemment. Il s'appuie du côté du réseau de téléphonie sur la fourniture préalable (et le stockage) d'un code d'authentification à l'utilisateur, associé au niveau du réseau de voix sur IP à une identité téléphonique publique allouée pour communiquer sur le réseau de voix sur IP, code d'authentification que l'utilisateur est invité à fournir à un serveur vocal lors du premier accès au réseau de téléphonie avec son terminal pour permettre le cas échéant le couplage de son terminal avec son identité téléphonique. L'invention ne requiert donc qu'une intervention limitée de l'utilisateur du terminal pour coupler son terminal. En outre elle améliore l'expérience de l'utilisateur par rapport à l'état de la technique, puisque celui-ci est redirigé lors de son premier accès au réseau de téléphonie de voix sur IP vers un serveur vocal. En d'autres mots, contrairement à l'état de la technique, l'utilisateur peut initier un appel depuis son terminal même si celui-ci n'est pas encore couplé à l'identité téléphonique allouée à l'utilisateur (i.e. il ne se heurte pas à une absence de tonalité dans son terminal lorsqu'il veut émettre un tel appel), mais cet appel est redirigé automatiquement par le réseau de voix sur IP, avant établissement de l'appel, vers un serveur vocal qui invite l'utilisateur à fournir un code d'authentification pour réaliser le couplage et fournir au terminal l'identité téléphonique publique qu'il pourra utiliser ultérieurement sur le réseau de voix sur IP.

Le code d'authentification fourni par l'utilisateur permet au dispositif du réseau de voix sur IP selon l'invention de s'assurer que le terminal qui cherche à établir un appel sur le réseau appartient bien à un utilisateur autorisé à accéder au réseau de téléphonie. De façon avantageuse, ce code d'authentification n'est requis auprès de l'utilisateur qu'une unique fois pour chacun de ses terminaux, i.e. uniquement la première fois qu'il tente d'utiliser le réseau de voix sur IP avec l'un de ses terminaux afin d'obtenir l'identité téléphonique publique qu'il est en droit d'utiliser pour communiquer sur le réseau de voix sur IP. Une fois cette identité téléphonique publique obtenue, le terminal peut l'utiliser pour passer des appels sur le réseau de voix sur IP, de façon classique. De même l'authentification du terminal sur le réseau de voix sur IP au moyen de la donnée d'authentification qu'il a obtenue du réseau peut être réalisée de façon standard. Le procédé selon l'invention ne requiert donc avantageusement aucune modification majeure des terminaux.

Ainsi, l'invention vise aussi un procédé de communication destiné à être mis en œuvre par un terminal de voix sur IP, le procédé comprenant :
- une étape d'émission d'un message d'initiation d'un appel de voix sur IP comprenant une identité téléphonique prédéterminée avec laquelle le terminal a été préalablement configuré ;
- une étape d'établissement d'un canal de voix sur IP avec un serveur vocal hébergé par un dispositif d'un réseau de voix sur IP d'un opérateur ;
- une étape de fourniture via ce canal au serveur vocal d'un code d'authentification d'un utilisateur du terminal ;
- une étape de réception du dispositif du réseau de voix sur IP d'une identité téléphonique publique allouée par l'opérateur du réseau voix sur IP à l'utilisateur du terminal et associée au niveau du réseau de voix sur IP audit code d'authentification fourni et une donnée d'authentification associée au niveau du réseau de voix sur IP à cette identité téléphonique publique ; et
- une étape d'émission d'au moins un nouveau message d'initiation d'un appel de voix sur IP comprenant l'identité téléphonique publique et une étape d'authentification auprès du réseau de voix sur IP en utilisant la donnée d'authentification.

Corrélativement, l'invention concerne également un terminal de voix sur IP comprenant :
- un module d'émission, configuré pour émettre un message d'initiation d'un appel de voix sur IP comprenant une identité téléphonique prédéterminée avec laquelle le terminal a été préalablement configuré ;
- un module d'établissement, configuré pour établir un canal de voix sur IP avec un serveur vocal hébergé par un dispositif d'un réseau de voix sur IP d'un opérateur ;
- un module de fourniture, configuré pour fournir au serveur vocal via le canal établi un code d'authentification d'un utilisateur du terminal ;
- un module de réception, apte à recevoir en provenance du dispositif une identité téléphonique publique allouée par l'opérateur du réseau voix sur IP à l'utilisateur du terminal et associée au niveau du réseau de voix sur IP au code d'authentification fourni par le module de fourniture et une donnée d'authentification associée à l'identité téléphonique publique au niveau du réseau de voix sur IP ;
et dans lequel le module d'émission est configuré pour émettre au moins un nouveau message d'initiation d'un appel de voix sur IP comprenant ladite identité téléphonique publique, ledit terminal comprenant en outre un module d'authentification, configuré pour s'authentifier auprès du réseau de voix sur IP en utilisant la donnée d'authentification.

L'invention peut donc s'appliquer dans de nombreux contextes, domestiques ou professionnels : le terminal au sens de l'invention peut être n'importe quel dispositif mettant en œuvre une technologie de voix sur IP tel qu'un téléphone matériel ou logiciel (ou « softphone » en anglais), mais également un autocommutateur privé de type PABX IP (ou IPBX pour « IP Private Branch eXchange » en anglais) auxquels sont rattachés une pluralité de terminaux de voix sur IP et permettant par exemple à une entreprise de gérer ses appels téléphoniques en interne ou vers l'extérieur en utilisant le protocole IP. Un utilisateur au sens de l'invention peut donc être un particulier ou un groupe d'utilisateurs tel une entreprise auquel l'opérateur du réseau de téléphonie a alloué une identité téléphonique pour communiquer sur son réseau.

Dans un mode particulier de réalisation du procédé de traitement, l'authentification du terminal préalable à l'étape de déclenchement comprend une étape de demande de fourniture au terminal d'une preuve de connaissance d'une donnée d'authentification associée au niveau du réseau de voix sur IP à l'identité téléphonique publique comprise dans le message reçu.

Une telle preuve de connaissance peut être apportée de façon connue en chiffrant de part et d'autre un message au moyen de la donnée d'authentification et en partageant les messages chiffrés pour déterminer si ceux-ci coïncident.

Ce mode de réalisation permet d'éviter la transmission directe de la donnée d'authentification du terminal vers le dispositif du réseau de voix sur IP, et donc de limiter les risques d'interception de cette donnée d'authentification par un tiers malveillant.

Dans un mode particulier de réalisation, lors de l'étape de détermination du procédé de traitement, le dispositif détermine que le message d'initiation reçu ne contient pas d'identité téléphonique publique allouée à un utilisateur par le réseau de voix sur IP s'il détecte la présence la présence dans le message d'initiation reçu d'une identité téléphonique prédéterminée communiquée au terminal lors d'une phase préalable de configuration du terminal.

Autrement dit, le terminal est dans ce mode de réalisation configuré pour utiliser, avant d'avoir reçu l'identité téléphonique publique allouée par le réseau, une identité téléphonique standard (par exemple 100), communiquée au terminal lors d'une phase préalable de configuration de celui-ci. Ce mode de réalisation facilite la détection par le dispositif du réseau de voix sur IP de l'absence de couplage du terminal : en effet, dès lors qu'il détecte dans un message d'initiation d'appel émis par un terminal la présence de cette identité téléphonique standard, le dispositif du réseau de voix sur IP peut en déduire que le terminal n'est pas encore couplé à une identité publique, sans interroger de base de données du réseau de voix sur IP.

Dans un mode particulier de réalisation, le procédé de traitement comprend en outre, si le code d'authentification obtenu est associé au niveau du réseau de voix sur IP à une identité téléphonique publique allouée par celui-ci à un utilisateur, une étape de déclenchement d'un établissement d'un appel de voix sur IP avec un destinataire du message d'initiation reçu du terminal.

Dans ce mode de réalisation, l'utilisateur du terminal, une fois authentifié par le dispositif du réseau de voix sur IP, n'a pas besoin de réémettre un nouveau message d'initiation d'appel. L'établissement de l'appel de voix sur IP est déclenché directement par le dispositif du réseau de voix sur IP.

L'étape de déclenchement de l'établissement d'un appel de voix sur IP peut comprendre notamment une étape de renégociation avec le terminal d'un canal de voix pour établir l'appel.

Autrement dit, dans ce mode de réalisation, le canal de voix établi entre le terminal et le serveur vocal est libéré puis un nouveau canal de voix est établi entre le terminal et le dispositif destinataire du message d'initiation d'appel pour permettre l'établissement de l'appel.

Comme mentionné à plusieurs reprises, l'invention s'applique dans le contexte d'un réseau de téléphonie de voix sur IP.

Dans un mode privilégié de réalisation, ce réseau de téléphonie de voix sur IP met en œuvre le protocole d'initiation de session SIP (Session Initiation Protocol), et le message d'initiation d'appel émis par le terminal est conforme au protocole SIP (il s'agit notamment d'un message SIP INVITE bien connu en soi). Le protocole SIP est un protocole couramment utilisé dans les réseaux de voix sur IP, ce qui facilite l'implémentation de l'invention dans différents réseaux.

Bien entendu, d'autres protocoles peuvent être utilisés en variante, comme par exemple des protocoles propriétaires.

Dans un mode particulier de réalisation, le serveur vocal comprend un module de reconnaissance vocale, et/ou un module de synthèse vocale, et/ou un agent conversationnel.

De tels modules permettent au serveur vocal de récupérer facilement le code d'authentification pour réaliser le couplage du terminal. Ce mode de réalisation améliore l'interactivité avec l'utilisateur et son expérience lors du couplage de son terminal.

Dans un mode particulier de réalisation, les différentes étapes du procédé de traitement et/ou du procédé de communication sont déterminées par des instructions de programmes d'ordinateurs.

En conséquence, l'invention vise aussi un programme d'ordinateur sur un support d'informations, ce programme étant susceptible d'être mis en œuvre dans un dispositif du réseau de voix sur IP ou plus généralement dans un ordinateur, ce programme comportant des instructions adaptées à la mise en œuvre des étapes d'un procédé de traitement tel que décrit ci-dessus. L'invention vise également un programme d'ordinateur sur un support d'informations, ce programme étant susceptible d'être mis en œuvre dans un terminal ou plus généralement dans un ordinateur, ce programme comportant des instructions adaptées à la mise en œuvre des étapes d'un procédé de communication tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect l'invention vise également un système de communication comprenant :
- au moins un terminal de voix sur IP conforme à l'invention ; et
- un dispositif d'un réseau de voix sur IP conforme l'invention apte à traiter des messages d'initiation d'appel sur le réseau de voix sur IP provenant dudit au moins un terminal.

On peut également envisager, dans d'autres modes de réalisation, que le procédé de traitement, le procédé de communication, le dispositif du réseau de voix sur IP apte à mettre en œuvre le procédé de traitement, le terminal apte à mettre en œuvre le procédé de communication et le système de communication selon l'invention présentent en combinaison tout ou partie des caractéristiques précipitées dans le cadre des revendications annexées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communication conforme à l'invention dans un mode particulier de réalisation ;
- la figure 2 illustre un exemple d'architecture matérielle d'un dispositif du système de communication de la figure 1, conforme à l'invention ; et
- la figure 3 illustre un exemple d'architecture matérielle d'un terminal du système de communication de la figure 1, conforme à l'invention ; et
- la figure 4 représente, sous la forme d'un diagramme de flux, les principales étapes d'un procédé de traitement tel qu'il est mis en œuvre dans un mode particulier de réalisation par le dispositif de la figure 2 ainsi que les principales étapes d'un procédé de communication tel qu'il est mis en œuvre dans ce mode particulier de réalisation par le terminal de la figure 3.

### Description détaillée de l'invention

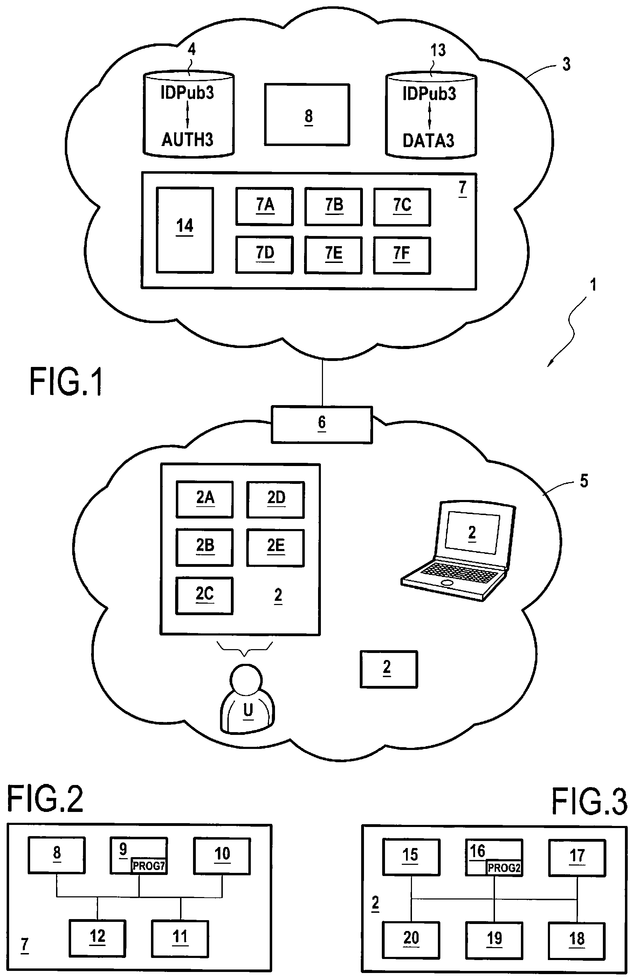

La **figure 1** représente, dans son environnement, un système de communication 1 conforme à l'invention, dans un mode particulier de réalisation.

Dans l'exemple illustré à la figure 1, le système de communication 1 permet de simplifier le couplage d'un terminal 2 d'un utilisateur U, conforme à l'invention, à une identité téléphonique allouée à l'utilisateur U par un réseau de téléphonie de voix sur IP 3 auprès duquel l'utilisateur U a souscrit un abonnement. On s'intéresse ici à un réseau de téléphonie fixe mettant en œuvre la technologie de voix sur IP s'appuyant sur le protocole SIP (Session Initiation Protocol). Cette dernière hypothèse n'est toutefois pas limitative en soi, et l'invention peut s'appliquer à d'autres protocoles adaptés à la voix sur IP, comme par exemple à des protocoles propriétaires.

Lors de la souscription par l'utilisateur de son abonnement auprès de l'opérateur du réseau 3, une identité téléphonique publique IDPub3 est allouée par l'opérateur du réseau 3 à l'utilisateur U. Cette identité téléphonique identifie l'utilisateur U sur le réseau de téléphonie de voix sur IP 3 et lui permet de communiquer via ce réseau avec d'autres utilisateurs. Il s'agit par exemple d'un numéro de téléphone, d'une adresse de type SIP URI (Uniform Resource Identifier), d'une adresse de type URL (Uniform Resource Locator), etc.

Conformément à l'invention, l'opérateur du réseau 3 fournit à l'utilisateur U, par exemple lors de la souscription de l'abonnement précité, un code d'authentification AUTH3 associé dans une base de données 4 du réseau 3 à l'identité téléphonique publique IDPub3. Aucune limitation n'est attachée à la forme que prend ce code d'authentification, ni comment il est généré ou échangé entre le réseau 3 et l'utilisateur U (préférentiellement toutefois de manière sécurisée) : il peut s'agir par exemple d'une chaîne de caractères alphanumériques ou uniquement de caractères numériques, d'un couple login/mot de passe convenu avec l'utilisateur U, etc. Ce code peut être fourni par courrier, par message électronique, par SMS (Short Message Service) ou par tout autre moyen à l'utilisateur U.

Dans l'exemple envisagé à la figure 1, on considère un contexte résidentiel, dans lequel un ou plusieurs utilisateurs U dispose(nt) d'un ou de plusieurs terminaux 2, connectés à un réseau local 5 géré par une passerelle résidentielle ou box 6. Par souci de simplification, on suppose ici que chacun des terminaux 2 est un terminal dit de voix sur IP capable de mettre en œuvre une technique de communication de voix sur IP (VoIP). Toutefois, cette hypothèse n'est en aucun cas limitative. Par ailleurs, aucune limitation n'est attachée à la nature des terminaux 2 : il peut s'agir de téléphones, matériels ou logiciels, d'ordinateurs équipés de logiciels de voix sur IP, etc. On suppose ici que les terminaux 2 sont équipés de moyens d'entrée/sortie leur permettant d'interagir avec l'utilisateur U comme par exemple un clavier, un microphone et un haut-parleur, etc.

La passerelle 6 permet aux terminaux 2 d'accéder à des réseaux externes au réseau local 5, comme par exemple au réseau public Internet ou encore au réseau 3 de téléphonie fixe de voix sur IP. En d'autres mots, pour émettre un appel sur le réseau 3 ou recevoir un appel via ce réseau 3, les terminaux 2 passent par la passerelle 6. Les fonctionnalités d'une telle passerelle sont connues en soi et ne sont pas décrites en détail ici.

Les appels de voix sur IP émis par les terminaux 2 du réseau local 5 transitent par un dispositif 7 du réseau de voix sur IP 3, conforme à l'invention, avant d'être transmis à une plateforme 8 du réseau de voix sur IP 3 configurée pour établir à proprement parler ces appels. Un tel dispositif 7 est par exemple un serveur d'application (ou AS pour Application Server), dédié à la mise en œuvre de l'invention et déclenché sur réception d'un message d'initiation d'appel en provenance des terminaux 2, ou il peut être intégré dans un équipement déjà existant du réseau de voix sur IP 3 tel que par exemple dans un contrôleur SBC (Session Border Controller), placé en bordure du réseau de voix sur IP 3 et équipé de fonctionnalités de routage telles que celles d'un serveur proxy ou d'un agent utilisateur B2BUA.

Dans le mode de réalisation décrit ici, le dispositif 7 a l'architecture matérielle d'un ordinateur, telle que représentée à la **figure 2****.** Il comprend notamment un processeur 8, une mémoire morte 9, une mémoire vive 10, une mémoire non volatile 11, et des moyens de communication 12. Ces moyens de communication 12 permettent au dispositif 7 de communiquer avec les terminaux 2 du réseau local 5, mais également avec d'autres équipements appartenant au réseau de téléphonie de voix sur IP 3. Ils incluent notamment ici une carte réseau et une pile de protocole VoIP adaptée à la mise en œuvre d'une technique de communication de voix sur IP selon le protocole SIP.

La mémoire morte 9 du dispositif 7 constitue un support d'enregistrement conforme à l'invention, lisible par le processeur et sur lequel est enregistré un programme d'ordinateur PROG7 conforme à l'invention, comportant des instructions pour l'exécution d'un procédé de traitement de messages d'initiation d'appel selon l'invention. Ce procédé est destiné, conformément à l'invention, à permettre le couplage sécurisé d'un terminal du réseau local avec une identité publique téléphonique du réseau de voix sur IP 3 pour lui permettre d'émettre et de recevoir des appels de voix sur IP via ce réseau.

On suppose ici que lorsque l'opérateur du réseau 3 alloue une identité téléphonique publique à un utilisateur, il renseigne la base de données 13 avec cette identité téléphonique. Par conséquent, lorsque l'utilisateur U a souscrit son abonnement auprès de l'opérateur du réseau 3, celui-ci a ajouté dans la base de données 13 l'identité téléphonique IDPub3 qu'il a allouée à l'utilisateur U. Il associe par ailleurs à cette identité téléphonique publique IDPub3 une donnée d'authentification DATA3. Aucune limitation n'est attachée à la forme de cette donnée d'authentification allouée par le réseau de voix sur IP à l'identité téléphonique publique IDPub3 : elle peut prendre la forme d'un mot de passe généré par le réseau de voix sur IP 3 (par exemple de façon aléatoire), d'un certificat, d'une clé de chiffrement, etc. Cette donnée d'authentification DATA3 est stockée dans la base de données 13 en association avec l'identité publique téléphonique IDPub3

Le programme d'ordinateur PROG7 définit divers modules fonctionnels et logiciels du dispositif 7, aptes à mettre en œuvre les étapes du procédé de traitement selon l'invention et s'appuyant sur les éléments matériels 8-12 du dispositif 7 décrits précédemment. Ces modules comprennent notamment ici :
- un module 7A de réception, apte à recevoir un message d'initiation d'un appel de voix sur IP en provenance d'un terminal 2 d'un utilisateur U connecté au réseau local 5. Un tel message est, dans l'exemple envisagé ici d'un réseau de téléphonie de voix sur IP implémentant le protocole SIP, un message SIP INVITE ;
- un module 7B de détermination, configuré pour déterminer si le message SIP INVITE reçu par le module 7A contient une identité téléphonique allouée par le réseau de voix sur IP 3 à un utilisateur ;
- un module 7C de déclenchement configuré pour déclencher l'établissement de l'appel de voix sur IP requis par le terminal 2 si le message comprend une telle identité publique téléphonique, après avoir authentifié positivement le terminal 2. Dans le mode de réalisation décrit ici, le module 7C est configuré pour transférer cet appel vers la plateforme 8 en charge de l'établissement à proprement parler des appels sur le réseau de voix sur IP 3 ;
- des modules, activés si le message reçu ne contient pas une identité téléphonique allouée par le réseau de voix sur IP 3 à un utilisateur, et comprenant :
   ∘ un module 7D d'établissement, configuré pour établir un canal de voix sur IP entre le terminal 2 et un serveur vocal interactif 14 hébergé par le dispositif 7. Dans le mode de réalisation décrit ici, le serveur vocal interactif 14 comprend un module de reconnaissance vocale (non représenté) connu en soi, lui permettant d'interagir avec l'utilisateur U et notamment de reconnaître (c'est-à-dire de saisir ou de capturer et de retranscrire) des informations fournies par l'utilisateur lors de son interaction avec le serveur vocal 14. En variante, un simple module apte à émettre de la parole vers l'utilisateur U pour requérir la fourniture d'informations et à recueillir les informations fournies par celui-ci peut être envisagé en remplacement du module de reconnaissance vocale. En variante ou en plus du module de reconnaissance vocale, le serveur vocal interactif 14 peut comprendre un agent conversationnel et/ou un module de synthèse vocale, également connus en soi et non décrits dans le détail ici ;
   ∘ un module 7E d'obtention, configuré pour obtenir via le canal de voix établi par le module 7D d'établissement entre le terminal 2 et le serveur vocal 14, un code d'authentification de l'utilisateur U du terminal 2. On note que l'utilisateur U peut fournir ce code d'authentification de différentes manières, par exemple vocalement ou en saisissant le code d'authentification sur le clavier de son terminal, auquel cas, le code d'authentification ainsi saisi est ensuite transmis par le terminal dans le canal de voix sur IP en utilisant des fréquences vocales ou DTMF (Dual Tone Multi Frequency). Le module 7E suivant l'implémentation choisie, peut comprendre donc le module de reconnaissance vocale précité du serveur vocal interactif 14, et/ou un module de réception de signaux DTMF compris également ici dans le serveur vocal interactif 14, et apte à extraire du signal DTMF reçu du terminal le code d'authentification véhiculé par ce signal ;
   o un module 7F de fourniture, configuré ici pour solliciter le module 7B de détermination afin qu'il détermine si le code d'authentification obtenu est associé au niveau du réseau de voix sur IP 3, et plus particulièrement dans la base de données 4, à une identité téléphonique publique allouée par celui-ci à un utilisateur, et le cas échéant pour fournir au terminal 2 cette identité téléphonique publique ainsi qu'une donnée d'authentification qui lui est associée au niveau du réseau de voix sur IP 3, et plus particulièrement ici dans la base de données 13.

Les fonctions des modules 7A-7F sont décrites plus en détail ultérieurement en référence aux étapes du procédé de traitement selon l'invention.

Dans le mode de réalisation décrit ici, le terminal 2 a l'architecture matérielle d'un ordinateur, telle que représentée à la **figure 3****.** Il comprend notamment un processeur 15, une mémoire morte 16, une mémoire vive 17, une mémoire non volatile 18, des moyens de communication 19, et des moyens d'interaction 20 avec l'utilisateur du terminal 2. Ces moyens d'interaction comprennent par exemple un écran, un microphone, un haut-parleur, etc.

Les moyens de communication 19 permettent au terminal 2 de communiquer avec la passerelle 6 du réseau local 5, mais également, par le biais de cette passerelle, avec les équipements du réseau de téléphonie de voix sur IP 3 et notamment avec le dispositif 7. Ils incluent notamment ici une carte réseau ou tout autre moyen de connectivité à la passerelle 6 (filaire ou sans fil) et une pile de protocole VoIP adaptée à la mise en œuvre d'une technique de communication de voix sur IP selon le protocole SIP.

La mémoire morte 16 du terminal 2 constitue un support d'enregistrement conforme à l'invention, lisible par le processeur et sur lequel est enregistré un programme d'ordinateur PROG2 conforme à l'invention, comportant des instructions pour l'exécution d'un procédé de communication selon l'invention. Le programme PROG2 définit divers modules fonctionnels et logiciels du terminal 2, aptes à mettre en œuvre les étapes du procédé de communication selon l'invention en s'appuyant notamment sur les éléments matériels 15-20 du terminal 2 décrits précédemment. Ces modules comprennent en particulier ici :
- un module 2A d'émission, apte à émettre un message d'initiation d'un appel sur le réseau de voix sur IP 3 ;
- un module 2B d'établissement, activé ici sur instruction du dispositif 7 du réseau de voix sur IP 3, et configuré pour établir un canal de voix sur IP avec le serveur vocal 14 ;
- un module 2C de fourniture, configuré pour fournir via le canal établi avec le serveur vocal 14 un code d'authentification de l'utilisateur du terminal 2, ce code d'authentification étant lui-même fourni vocalement au module 2C par l'utilisateur du terminal 2 via les moyens d'entrée/sortie 20 du terminal 2 ;
- un module 2D de réception, apte à recevoir en provenance du dispositif 7 du réseau de voix sur IP 3, une identité téléphonique publique associée au niveau du réseau de voix sur IP 3 au code d'authentification fourni par le module 2C de fourniture au serveur vocal 14, ainsi qu'une donnée d'authentification associée à cette identité téléphonique publique au niveau du réseau de voix sur IP (dans la base de données 13 ici) ;
- un module d'authentification 2E, configuré pour interagir avec le dispositif 7 en vue d'authentifier le terminal 2 auprès du réseau de voix sur IP 3 en utilisant la donnée d'authentification reçue par le module 2D de réception.

Dans le mode de réalisation décrit ici, on suppose que le terminal 2 est initialement configuré, par exemple en usine, avec une identité téléphonique prédéterminée, standard, notée IDFIX. Cette identité téléphonique est fixée à une valeur quelconque arbitraire, par exemple 100. Le module 2A d'émission est également configuré pour utiliser cette identité téléphonique standard pour émettre des appels de voix sur IP tant qu'il n'a pas été couplé à une identité téléphonique publique allouée par le réseau de voix sur IP 3 conformément à l'invention. Autrement dit, lorsque l'utilisateur U utilise pour la première fois son terminal 2 pour passer un appel de voix sur IP via le réseau de voix sur IP 3 celui-ci émet via son module 2A d'émission un message SIP INVITE comprenant dans le champ FROM de son entête l'identité téléphonique standard IDFIX=100. Suite à la réception de l'identité téléphonique publique allouée par le réseau de voix sur IP 3 à l'utilisateur U conformément à l'invention, le module 2A remplace cette identité téléphonique standard IDFIX par l'identité téléphonique publique qu'il a reçue du dispositif 7 : en d'autres mots, le module 2A d'émission est dès lors configuré pour utiliser cette identité téléphonique publique pour passer des appels de voix sur IP via le réseau de voix sur IP 3, et notamment pour insérer cette identité téléphonique publique dans le champ FROM des entêtes des messages SIP INVITE qu'il envoie.

Les fonctions des modules 2A-2E sont décrites plus en détail maintenant en référence aux étapes du procédé de communication selon l'invention.

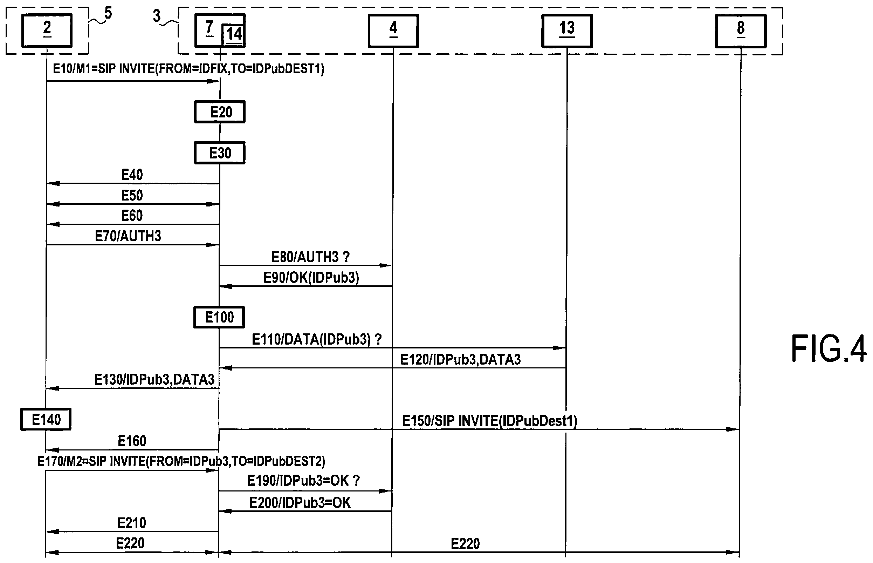

La **figure 4** représente les principales étapes des procédés de traitement et de communication selon l'invention, tels qu'ils sont mis en œuvre respectivement, dans un mode particulier de réalisation, par le dispositif 7 du réseau de voix sur IP 3 et par un terminal 2 de l'utilisateur U.

On suppose ici que l'utilisateur U souhaite utiliser ce terminal 2 pour passer un appel en voix sur IP via le réseau 3 de téléphonie fixe et que ce terminal 2 n'a jamais été jusqu'alors couplé avec l'identité téléphonique IDPub3 allouée à l'utilisateur U lors de la souscription de son abonnement auprès de l'opérateur du réseau 3.

Pour émettre un appel sur le réseau 3, le terminal 2 émet, de façon connue et via son module 2A d'émission, un message SIP INVITE M1 à destination du réseau 3 contenant, dans son entête (dans le champ TO), l'identité téléphonique publique du destinataire DEST1 que l'utilisateur U cherche à joindre, notée IDPubDEST1 ici (étape E10). Comme mentionné précédemment, on suppose à ce stade que le terminal 2 est configuré avec une identité téléphonique standard IDFIX, reçue par exemple lors de sa configuration en usine ou lors d'une (ré-)initialisation du terminal 2, et que son module 2A d'émission est configuré pour utiliser cette identité téléphonique standard IDFIX lorsqu'il envoie des messages d'initiation d'appel (en l'insérant notamment dans le champ FROM des entêtes des messages SIP INVITE qu'il émet). Le premier message SIP INVITE M1 émis par le terminal 2 comprend donc dans son champ TO l'identité téléphonique publique IDPubDEST1 du destinateur DEST1 et dans son champ FROM l'identité téléphonique standard IDFIX.

Ce message SIP INVITE M1 transite par la passerelle 6 du réseau local 5, puis est reçu par le dispositif 7 du réseau de voix sur IP 3 et plus particulièrement par son module 7A de réception (étape E20).

Le module 7B de détermination du dispositif 7 analyse alors le contenu du message M1 SIP INVITE reçu du terminal 2 et plus particulièrement le contenu du champ FROM du message M1. Il détermine s'il contient une identité téléphonique publique allouée par le réseau de voix sur IP 3 à un utilisateur U (étape E30).

Dans le mode de réalisation décrit ici, le champ FROM du message M1 contient l'identité téléphonique standard IDFIX. Sur détection de cette identité téléphonique standard, le module 7B de détermination reconnait que cette identité téléphonique standard est une identité prédéterminée « factice » et n'est pas une identité téléphonique publique allouée par le réseau de voix sur IP 3.

En variante, il peut consulter la base de données 4 du réseau de voix sur IP 3 pour déterminer si le contenu du champ FROM (par exemple l'identité téléphonique standard IDFIX ici) est une identité téléphonique publique allouée par le réseau de voix sur IP 3.

L'absence d'identité téléphonique publique allouée par le réseau de voix sur IP 3 dans le message SIP INVITE M1 déclenche l'activation des modules 7D à 7F du dispositif 7 et du serveur vocal 14.

Plus précisément, le dispositif 7, via son module 7D d'établissement, déclenche l'établissement d'un canal de voix sur IP entre le terminal 2 et le serveur vocal interactif 14 (étape E40). A cet effet, dans le mode de réalisation décrit ici et le contexte SIP envisagé, le module 7D envoie au serveur vocal interactif 14 un message SIP INVITE auquel celui-ci répond par un message 200 OK contenant ses informations média pour l'établissement d'un flux média (flux RTP pour Real Time Protocol). Le module 7D répond au message SIP INVITE M1 émis par le terminal 2 en lui envoyant un message d'acceptation 200 OK contenant les informations média du serveur vocal 14.

Sur réception de ce message de réponse, un canal de voix sur IP est établi entre le terminal 2 et le serveur vocal 14 (on note que la signalisation relative à ce canal de voix sur IP n'est pas échangée de manière directe entre le terminal 2 et le serveur vocal 14 mais passe par le dispositif 7, la signalisation et les flux media étant gérés de façon séparée dans le protocole SIP) (étape E50).

Une fois ce canal établi, le serveur vocal interactif 14 interagit avec l'utilisateur U du terminal 2, et notamment l'invite à fournir le code d'authentification qu'il a reçu du réseau 3 lors de la souscription de son abonnement auprès de l'opérateur du réseau 3 (étape E60).

En réponse à cette invitation, l'utilisateur U fournit via son terminal 2 et son module 2C de fourniture le code d'authentification AUTH3 que lui a donné l'opérateur du réseau 3 lors de la souscription de son abonnement (étape E70). A cet effet, il peut soit prononcer le code d'authentification AUTH3 via le microphone de son terminal 2, soit de manière plus discrète, fournir ce code d'authentification via le clavier de son terminal 2. Dans cette dernière hypothèse, le code d'authentification est alors transmis par le module de fourniture 2C sur le canal de voix sur IP via un signal utilisant des fréquences vocales (DTMF) et est reçu par le module de réception du serveur vocal interactif 14.

Le code d'authentification AUTH3 est obtenu et reconnu par le serveur vocal interactif 14 par l'intermédiaire de son module de reconnaissance vocale ou par l'intermédiaire de son module de réception de signaux DTMF. Le code d'authentification AUTH3 est fourni par le serveur vocal 14 au module 7E d'obtention du dispositif 7. On note que l'invitation de l'utilisateur U à fournir son code d'authentification, l'obtention du code par le serveur vocal 14 via le canal de voix sur IP établi et sa fourniture au module 7E constituent une étape d'obtention du code d'authentification de l'utilisateur U par le dispositif 7 au sens de l'invention.

Puis le dispositif 7, par l'intermédiaire ici de son module 7B de détermination, vérifie auprès de la base de données 4 du réseau 3 si le code d'authentification AUTH3 fourni par l'utilisateur U correspond à une identité téléphonique précédemment allouée par le réseau 3 à un utilisateur. A cet effet, le module 7B de détermination interroge la base de données 4 du réseau 3 en lui transmettant le code d'authentification AUTH3 reçu de l'utilisateur U (étape E80).

Dans l'exemple envisagé ici, le code d'authentification AUTH3 est associé dans la base de données 4 à une identité téléphonique, à savoir à l'identité téléphonique IDPub3 allouée par le réseau 3 à l'utilisateur U. La base de données 4 renvoie une réponse positive au dispositif 7 incluant l'identité téléphonique IDPub3 (étape E90).

Sur réception de la réponse positive de la base de données 4 et de l'identité téléphonique publique IDPub3, le dispositif 7 via son module 7F de fourniture interroge la base de données 13 du réseau de voix sur IP 3 pour obtenir une donnée d'authentification associée dans la base de données 13 à l'identité téléphonique publique IDPub3 (étape E100).

La base de données 13 répond au dispositif 7 en lui fournissant la donnée d'authentification DATA3 associée par le réseau de voix sur IP 3 à l'identité téléphonique publique IDPub3 (étape E120).

Dans le mode de réalisation décrit ici, le dispositif 7, suite à l'obtention de la donnée d'authentification DATA3, met fin à l'appel établi entre le terminal 2 et le serveur vocal interactif 14, et envoie à cet effet un message SIP BYE au serveur vocal interactif 14.

Par ailleurs, le dispositif 7 fournit, via son module 7F de fourniture, au terminal 2 l'identité téléphonique publique IDPub3 et la donnée d'authentification DATA3 associée reçues du réseau de voix sur IP 3 (étape E130). Dans le mode de réalisation décrit ici, ces informations sont fournies de manière sécurisée au terminal 2, par exemple via une liaison sécurisée établie entre le terminal 2 et le dispositif 7 de façon connue en soi et non décrite ici. En variante, ces informations peuvent être chiffrées avant d'être envoyées au terminal 2.

Ces informations sont reçues par le module 2D de réception du terminal 2 et stockées dans sa mémoire non volatile 18 pour un usage ultérieur sur le réseau de voix sur IP 3, et notamment pour émettre des appels de voix sur IP et s'authentifier auprès du réseau de voix sur IP 3 comme décrit plus en détail ci-après (étape E140).

Puis le dispositif 7, par le biais de son module 7C de déclenchement, déclenche l'établissement de l'appel requis par le terminal 2 : ceci se traduit, dans le mode de réalisation décrit ici, par le transfert du message d'initiation d'appel SIP INVITE reçu lors de l'étape E10 à la plateforme VoIP 8 du réseau 3 pour qu'elle opère de façon connue en soi en vue d'établir l'appel avec le destinataire identifié par l'identité téléphonique IDPubDest1 (étape E150).

Par ailleurs, le module 7C de déclenchement du dispositif 7 renégocie avec le module 2A d'établissement du terminal 2 un nouveau canal de voix sur IP pour pouvoir établir l'appel avec le destinataire identifié par l'identité téléphonique IDPubDest1 (étape E160). Ceci se fait de façon connue en soi, non décrite en détail ici en envoyant un message SIP REINVITE au terminal 2. A l'issue de cette renégociation, si le destinataire DEST1 a répondu favorablement, l'appel est établi (non représenté sur la figure 4).

On suppose maintenant que l'utilisateur U souhaite émettre un nouvel appel de voix sur IP via son terminal 2 vers par exemple un autre destinataire DEST2 dont l'identité téléphonique est IDPubDEST2.

Le terminal 2 envoie un nouveau message SIP INVITE M2 d'initiation d'appel contenant dans le champ TO de son entête l'identité téléphonique IDPubDEST2 via son module d'émission 2A (étape E170). Conformément à l'invention, le terminal 2 insère en outre dans l'entête FROM de ce message SIP INVITE l'identité téléphonique publique IDPub3 allouée par le réseau de voix sur IP 3. Il procède maintenant de la sorte pour chaque nouveau message d'initiation d'appel de voix sur IP passé via le réseau de voix sur IP 3.

Le message SIP INVITE M2 émis par le terminal 2 transite par la passerelle 6 et est reçu par le module 7A de réception du dispositif 7 dans le réseau de voix sur IP 3 (étape E180).

Comme décrit précédemment à l'étape E30, le module 7B de détermination du dispositif 7 détermine si le message SIP INVITE reçu du terminal 2 contient ou non une identité téléphonique publique allouée à un utilisateur par le réseau de voix sur IP 3 (étape E190). A cet effet, le module 7B de détermination extrait l'identité téléphonique IDPub3 contenue dans le champ FROM du message SIP INVITE M2 et vérifie auprès de la base de données 4 s'il s'agit bien d'une identité téléphonique publique allouée par le réseau de voix sur IP 3 à un utilisateur.

Dans l'exemple envisagé ici, l'identité téléphonique IDPub3 est contenue dans la base de données 4 et est bien une identité téléphonique publique allouée par le réseau de voix sur IP 3 à un utilisateur. La base de données 4 répond donc positivement au module 7B de détermination du dispositif 7 (étape E200).

Cette réponse positive déclenche ici l'envoi d'une procédure d'authentification du terminal 2 par le dispositif 7 (étape E210). Cette authentification peut être réalisée par exemple de manière similaire à ce qui est décrit dans le document RFC 2617, juin 1999 dans le cadre du protocole HTTP (HyperText Transfer Protocol) en demandant au terminal 2 une preuve de connaissance de la donnée d'authentification DATA3 associée à l'identité téléphonique IDPub3.

On suppose ici que le terminal 2 s'authentifie de façon positive auprès du dispositif 7 en utilisant la donnée d'authentification DATA3.

Suite à l'authentification positive du terminal 2, le module 7C de déclenchement du dispositif 7 déclenche l'établissement de l'appel vers le destinataire DEST2 identifié par l'identité téléphonique IDPubDest2 (étape E220). Ceci consiste ici d'une part à transférer le message SIP INVITE reçu du terminal 2 vers la plateforme VoIP 8 et d'autre part à établir un canal de voix sur IP avec le module 2A d'établissement du terminal 2 pour supporter l'appel, de façon connue en soi et non décrite en détail ici.

Dans l'exemple envisagé ici, on s'est intéressé au couplage d'un terminal 2 d'un utilisateur, lorsque le terminal est relié directement à la passerelle 6. Ceci peut être le cas par exemple dans un environnement domestique ou résidentiel. L'invention peut toutefois s'appliquer dans d'autres contextes : typiquement, l'utilisateur peut être une entité morale, comme une entreprise, et le terminal couplé à l'identité publique peut être une plateforme de type IPBX chargée de relier une pluralité d'utilisateurs de l'entreprise (ex. employés) à un réseau de voix sur IP via une passerelle d'accès 6 au réseau de voix sur IP. Dans ce cas, c'est un certificat alloué de manière unique à la plateforme IPBX qui est couplé dans le réseau de voix sur IP avec l'identité publique (i.e. le terminal au sens de l'invention est une plateforme IPBX). Bien d'autres contextes peuvent encore être envisagés.

On note que l'invention offre la possibilité de coupler aisément plusieurs terminaux à une même identité téléphonique publique allouée par le réseau de voix sur IP, chaque terminal procédant de la même façon que ce qui vient d'être décrit pour le terminal 2.

## Revendications

1. Procédé de traitement de messages par un dispositif d'un réseau de voix sur IP (3) d'un opérateur, comprenant, suite à une réception d'un message (M1,M2) d'initiation d'un appel de voix sur IP en provenance d'un terminal (2) de voix sur IP :
- une étape de détermination (E30,E190) si le message reçu contient une identité téléphonique publique allouée à un utilisateur du terminal (2) par l'opérateur du réseau de voix sur IP ;
- si le message contient une dite identité téléphonique publique, une étape de déclenchement (E220) d'un établissement de l'appel de voix sur IP avec un destinataire du message reçu suite à une authentification positive du terminal;
- sinon :
∘ une étape d'établissement (E50) d'un canal de voix sur IP entre le terminal (2) et un serveur vocal (14) hébergé par le dispositif du réseau de voix sur IP ;
o une étape d'obtention (E70) par le serveur vocal via ce canal d'un code d'authentification (AUTH3) de l'utilisateur du terminal (2) ;
o si le code d'authentification obtenu est associé au niveau du réseau de voix sur IP à une identité téléphonique publique (IDPub3) allouée par l'opérateur du réseau de voix sur IP à l'utilisateur du terminal (2), une étape de fourniture (E130) au terminal (2) de ladite identité téléphonique publique (IDPub3) et d'une donnée d'authentification (DATA3) associée au niveau du réseau de voix sur IP à cette identité téléphonique publique pour émettre des appels de voix sur IP et s'authentifier auprès du réseau de voix sur IP.

2. Procédé de traitement selon la revendication 1 dans lequel l'authentification (E120) du terminal préalable à l'étape de déclenchement comprend une étape de demande de fourniture au terminal d'une preuve de connaissance d'une donnée d'authentification associée au niveau du réseau de voix sur IP à l'identité téléphonique publique comprise dans le message reçu.

3. Procédé de traitement selon la revendication 1 ou 2 dans lequel, lors de l'étape de détermination, le dispositif détermine que le message d'initiation reçu ne contient pas d'identité téléphonique publique allouée à l'utilisateur du terminal (2) par l'opérateur du réseau de voix sur IP s'il détecte la présence la présence dans le message d'initiation reçu d'une identité téléphonique prédéterminée (IDFIX) communiquée au terminal (2) lors d'une phase préalable de configuration du terminal (2).

4. Procédé de traitement selon l'une quelconque des revendications 1 à 3 comprenant en outre, si le code d'authentification obtenu est associé au niveau du réseau de voix sur IP à une identité téléphonique publique allouée par l'opérateur du réseau de voix sur IP à l'utilisateur du terminal (2), une étape de déclenchement d'un établissement d'un appel de voix sur IP avec un destinataire du message d'initiation reçu du terminal.

5. Procédé de traitement selon la revendication 4 dans lequel l'étape de déclenchement de l'établissement d'un appel de voix sur IP comprend une étape de renégociation avec le terminal d'un canal de voix pour établir l'appel.

6. Procédé de traitement selon l'une quelconque des revendications 1 à 5 dans lequel le message d'initiation d'appel (M1,M2) est un message conforme au protocole SIP (Session Initiation Protocol).

7. Procédé de traitement selon l'une quelconque des revendications 1 à 6 dans lequel lors de l'étape de fourniture, l'identité téléphonique publique et la donnée d'authentification sont fournies au terminal de manière sécurisée.

8. Procédé de communication par un terminal (2) de voix sur IP comprenant :
- une étape d'émission (E10) d'un message d'initiation (M1) d'un appel de voix sur IP comprenant une identité téléphonique prédéterminée avec laquelle le terminal a été préalablement configuré ;
- une étape d'établissement (E50) d'un canal de voix sur IP avec un serveur vocal (14) hébergé par un dispositif d'un réseau de voix sur IP d'un opérateur ;
- une étape de fourniture (E70) via ce canal au serveur vocal d'un code d'authentification d'un utilisateur du terminal ;
- une étape de réception (E130) du dispositif du réseau de voix sur IP d'une identité téléphonique publique allouée par l'opérateur du réseau voix sur IP à l'utilisateur du terminal et associée au niveau du réseau de voix sur IP audit code d'authentification fourni et une donnée d'authentification associée au niveau du réseau de voix sur IP à cette identité téléphonique publique ; et
- une étape d'émission (E170) d'au moins un nouveau message d'initiation (M2) d'un appel de voix sur IP comprenant ladite identité téléphonique publique et une étape d'authentification auprès du réseau de voix sur IP en utilisant la donnée d'authentification.

9. Programme d'ordinateur (PROG7,PROG2) comportant des instructions pour l'exécution des étapes du procédé de traitement selon l'une quelconque des revendications 1 à 7 ou du procédé de communication selon la revendication 8 lorsque ledit programme est exécuté par un ordinateur.

10. Support d'enregistrement (16) lisible par un ordinateur sur lequel est enregistré un programme d'ordinateur selon la revendication 9.

11. Dispositif (7) d'un réseau de voix sur IP (3) hébergeant un serveur vocal (14) et comprenant des modules activés sur réception par le dispositif d'un message d'initiation d'un appel de voix sur IP en provenance d'un terminal (2) de voix sur IP, lesdits modules comprenant :
- un module (7B) de détermination, configuré pour déterminer si le message reçu contient une identité téléphonique publique allouée à un utilisateur du terminal (2) par l'opérateur du réseau de voix sur IP ;
- un module (7C) de déclenchement, configuré pour déclencher un établissement de l'appel de voix sur IP avec un destinataire du message reçu si le module de détermination détermine que le message reçu contient une dite identité téléphonique publique;
- des modules, activés sinon, comprenant :
∘ un module (7D) d'établissement, configuré pour établir un canal de voix sur IP entre le terminal et le serveur vocal (14) ;
o un module (7E) d'obtention, configuré pour obtenir via ce canal, un code d'authentification (AUTH3) de l'utilisateur du terminal ; et
∘ un module de fourniture, activé si le code d'authentification obtenu est associé au niveau du réseau de voix sur IP à une identité téléphonique publique allouée par l'opérateur du réseau voix sur IP à l'utilisateur du terminal (2), et configuré pour fournir au terminal ladite identité téléphonique publique (IDPub3) et une donnée d'authentification associée au niveau du réseau de voix sur IP à l'identité téléphonique publique pour émettre des appels de voix sur IP et s'authentifier auprès du réseau de voix sur IP.

12. Dispositif (7) selon la revendication 11 dans lequel le serveur vocal (14) comprend un module de reconnaissance vocale et/ou un module de synthèse vocale et/ou un agent conversationnel.

13. Terminal (2) de voix sur IP comprenant :
- un module (2A) d'émission, configuré pour émettre un message d'initiation d'un appel de voix sur IP comprenant une identité téléphonique prédéterminée avec laquelle le terminal a été préalablement configuré ;
- un module (2B) d'établissement, configuré pour établir un canal de voix sur IP avec un serveur vocal hébergé par un dispositif d'un réseau de voix sur IP d'un opérateur ;
- un module (2C) de fourniture, configuré pour fournir au serveur vocal via le canal établi un code d'authentification d'un utilisateur du terminal ;
- un module (2D) de réception, apte à recevoir en provenance du dispositif une identité téléphonique publique allouée par l'opérateur du réseau voix sur IP à l'utilisateur du terminal et associée au niveau du réseau de voix sur IP au code d'authentification fourni par le module de fourniture et une donnée d'authentification associée à l'identité téléphonique publique au niveau du réseau de voix sur IP ;
et dans lequel le module (2A) d'émission est configuré pour émettre au moins un nouvel message d'initiation d'un appel de voix sur IP comprenant ladite identité téléphonique publique, ledit terminal comprenant en outre un module d'authentification, configuré pour s'authentifier auprès du réseau de voix sur IP en utilisant la donnée d'authentification.

14. Système de communication (1) comprenant :
- au moins un terminal (2) de voix sur IP conforme à la revendication 13 ; et
- un dispositif (7) d'un réseau de voix sur IP conforme la revendication 11 ou 12 apte à traiter des messages d'initiation d'appel sur le réseau de voix sur IP provenant dudit au moins un terminal (2).

## Patentansprüche

1. Verfahren zur Verarbeitung von Nachrichten durch eine Vorrichtung eines Voice-over-IP-Netzwerks (3) eines Betreibers, umfassend, nach einem Empfangen einer Initiierungsnachricht (M1, M2) für einen Voice-over-IP-Anruf von einem Voice-over-IP-Endgerät (2):
- einen Schritt des Bestimmens (E30, E190), ob die empfangene Nachricht eine öffentliche Telefonidentität enthält, die einem Benutzer des Endgeräts (2) von dem Betreiber des Voice-over-IP-Netzwerks zugewiesen wurde;
- wenn die Nachricht eine solche öffentliche Telefonidentität enthält, einen Schritt des Auslösens (E220) eines Aufbaus des Voice-over-IP-Anrufs zu einem Empfänger der empfangenen Nachricht nach einer positiven Authentifizierung des Endgeräts;
- ansonsten:
∘ einen Schritt des Aufbauens (E50) eines Voice-over-IP-Kanals zwischen dem Endgerät (2) und einem Sprachserver (14), der von der Vorrichtung des Voice-over-IP-Netzwerks gehostet wird;
∘ einen Schritt des Erhaltens (E70) eines Authentifizierungscodes (AUTH3) des Benutzers des Endgeräts (2) durch den Sprachserver über diesen Kanal;
∘ wenn der erhaltene Authentifizierungscode auf Ebene des Voice-over-IP-Netzwerks einer öffentlichen Telefonidentität (IDPub3) zugeordnet ist, die dem Benutzer des Endgeräts (2) von dem Betreiber des Voice-over-IP-Netzes zugewiesen wurde, einen Schritt des Bereitstellens (E130), für das Endgerät (2), der öffentlichen Telefonidentität (IDPub3) und eines Authentifizierungsdatenelements (DATA3), das auf Ebene des Voice-over-IP-Netzwerks dieser öffentlichen Telefonidentität zugeordnet ist, um Voice-over-IP-Anrufe zu senden und sich bei dem Voice-over-IP-Netzwerk zu authentifizieren.

2. Verfahren zur Verarbeitung nach Anspruch 1, wobei die Authentifizierung (E120) des Endgeräts vor dem Schritt des Auslösens einen Schritt des Anforderns, von dem Endgerät, der Bereitstellung eines Nachweises für die Kenntnis eines Authentifizierungsdatenelements, das auf Ebene des Voice-over-IP-Netzwerks der in der empfangenen Nachricht enthaltenen öffentlichen Telefonidentität zugeordnet ist.

3. Verfahren zur Verarbeitung nach Anspruch 1 oder 2, wobei die Vorrichtung bei dem Schritt des Bestimmens bestimmt, dass die empfangene Initiierungsnachricht keine öffentliche Telefonidentität enthält, die dem Benutzer des Endgeräts (2) von dem Betreiber des Voice-over-IP-Netzwerks zugewiesen wurde, wenn sie das Vorhandensein, in der empfangenen Initiierungsnachricht, einer vorbestimmten Telefonidentität (IDFIX) detektiert, die dem Endgerät (2) bei einer vorherigen Konfigurationsphase des Endgeräts (2) mitgeteilt wurde.

4. Verfahren zur Verarbeitung nach einem der Ansprüche 1 bis 3, ferner umfassend, wenn der erhaltene Authentifizierungscode auf Ebene des Voice-over-IP-Netzwerks einer öffentlichen Telefonidentität zugeordnet ist, die dem Benutzer des Endgeräts (2) von dem Betreiber des Voice-over-IP-Netzwerks zugewiesen wurde, einen Schritt des Auslösens eines Aufbaus eines Voice-over-IP-Anrufs zu einem Empfänger der von dem Endgerät empfangenen Initiierungsnachricht.

5. Verfahren zur Verarbeitung nach Anspruch 4, wobei der Schritt des Auslösens des Aufbaus eines Voice-over-IP-Anrufs einen Schritt des Neuaushandelns eines Sprachkanal zum Aufbauen des Anrufs mit dem Endgerät umfasst.

6. Verfahren zur Verarbeitung nach einem der Ansprüche 1 bis 5, wobei die Anrufinitiierungsnachricht (M1, M2) eine Nachricht gemäß dem Protokoll SIP (Session Initiation Protocol) ist.

7. Verfahren zur Verarbeitung nach einem der Ansprüche 1 bis 6, wobei bei dem Schritt des Bereitstellens die öffentliche Telefonidentität und das Authentifizierungsdatenelement dem Endgerät auf gesicherte Weise bereitgestellt werden.

8. Verfahren zur Kommunikation durch ein Voice-over-IP-Endgerät (2), umfassend:
- einen Schritt des Sendens (E10) einer Initiierungsnachricht (M1) für einen Voice-over-IP-Anruf, die eine vorbestimmte Telefonidentität umfasst, mit der das Endgerät zuvor konfiguriert worden ist;
- einen Schritt des Aufbauens (E50) eines Voice-over-IP-Kanals zu einem Sprachserver (14), der von einer Vorrichtung eines Voice-over-IP-Netzwerks eines Betreibers gehostet wird;
- einen Schritt des Bereitstellens (E70) eines Authentifizierungscodes eines Benutzers des Endgeräts über diesen Kanal für den Sprachserver;
- einen Schritt des Empfangens (E130), von der Vorrichtung des Voice-over-IP-Netzwerks, einer öffentlichen Telefonidentität, die dem Benutzer des Endgeräts von dem Betreiber des Voice-over-IP-Netzwerks zugewiesen wurde und auf Ebene des Voice-over-IP-Netzwerks dem bereitgestellten Authentifizierungscode zugeordnet ist, und eines Authentifizierungsdatenelements, das auf Ebene des Voice-over-IP-Netzwerks dieser öffentlichen Telefonidentität zugeordnet ist; und
- einen Schritt des Sendens (E170) mindestens einer neuen Initiierungsnachricht (M2) für einen Voice-over-IP-Anruf, welche die öffentliche Telefonidentität umfasst, und einen Schritt des Authentifizierens bei dem Voice-over-IP-Netzwerk unter Verwendung des Authentifizierungsdatenelements.

9. Computerprogramm (PROG7, PROG2), das Anweisungen beinhaltet, die bei der Ausführung des Programms durch einen Computer die Schritte des Verfahrens zur Verarbeitung nach einem der Ansprüche 1 bis 7 oder des Verfahrens zur Kommunikation nach Anspruch 8 ausführen.

10. Computerlesbares Speichermedium (16), auf dem ein Computerprogramm nach Anspruch 9 gespeichert ist.

11. Vorrichtung (7) eines Voice-over-IP-Netzwerks (3), die einen Sprachserver (14) hostet und Module umfasst, die beim Empfangen einer Initiierungsnachricht für einen Voice-over-IP-Anruf von einem Voice-over-IP-Endgerät (2) durch die Vorrichtung aktiviert werden, wobei die Module umfassen:
- ein Bestimmungsmodul (7B), das dazu ausgestaltet ist zu bestimmen, ob die empfangene Nachricht eine öffentliche Telefonidentität enthält, die einem Benutzer des Endgeräts (2) von dem Betreiber des Voice-over-IP-Netzwerks zugewiesen wurde;
- ein Auslösemodul (7C), das dazu ausgestaltet ist, einen Aufbau des Voice-over-IP-Anrufs zu einem Empfänger der empfangenen Nachricht auszulösen, wenn das Bestimmungsmodul bestimmt, dass die empfangene Nachricht eine solche öffentliche Telefonidentität enthält;
- Module, die ansonsten aktiviert werden, umfassend:
∘ ein Aufbaumodul (7D), das dazu ausgestaltet ist, einen Voice-over-IP-Kanal zwischen dem Endgerät und einem Sprachserver (14) aufzubauen;
∘ ein Erhaltungsmodul (7E), das dazu ausgestaltet ist, über diesen Kanal einen Authentifizierungscode (AUTH3) des Benutzers des Endgeräts zu erhalten; und
∘ ein Bereitstellungsmodul, das aktiviert wird, wenn der erhaltene Authentifizierungscode auf Ebene des Voice-over-IP-Netzwerks einer öffentlichen Telefonidentität zugeordnet ist, die dem Benutzer des Endgeräts (2) von dem Betreiber des Voice-over-IP-Netzwerks zugewiesen wurde, und dazu ausgestaltet ist, dem Endgerät die öffentliche Telefonie-Identität (IDPub3) und ein Authentifizierungsdatenelement, das auf Ebene des Voice-over-IP-Netzwerk der öffentlichen Telefonie-Identität zugeordnet ist, um Voice-over-IP-Anrufe zu senden und sich bei dem Voice-over-IP-Netzwerk zu authentifizieren, bereitzustellen.

12. Vorrichtung (7) nach Anspruch 11, wobei der Sprachserver (14) ein Spracherkennungsmodul und/oder ein Sprachsynthesemodul und/oder ein Konversationssystem umfasst.

13. Voice-over-IP-Endgerät (2), umfassend:
- ein Sendemodul (2A), das dazu ausgestaltet ist, eine Initiierungsnachricht für einen Voice-over-IP-Anruf zu senden, die eine vorbestimmte Telefonidentität umfasst, mit der das Endgerät zuvor konfiguriert worden ist;
- ein Aufbaumodul (2B), das dazu ausgestaltet ist, einen Voice-over-IP-Kanal zu einem Sprachserver aufzubauen, der von einer Vorrichtung eines Voice-over-IP-Netzwerks eines Betreibers gehostet wird;
- ein Bereitstellungsmodul (2C), das dazu ausgestaltet ist, dem Sprachserver über den aufgebauten Kanal einen Authentifizierungscode eines Benutzers des Endgeräts bereitzustellen;
- ein Empfangsmodul (2D), das geeignet ist, von der Vorrichtung eine öffentliche Telefonidentität, die dem Benutzer des Endgeräts von dem Betreiber des Voice-over-IP-Netzwerks zugewiesen wurde und auf Ebene des Voice-over-IP-Netzwerks dem von dem Bereitstellungsmodul bereitgestellten Authentifizierungscode zugeordnet ist, und ein Authentifizierungsdatenelement, das der öffentlichen Telefonidentität auf Ebene des Voice-over-IP-Netzwerks zugeordnet ist, zu empfangen;
und wobei das Sendemodul (2A) dazu ausgestaltet ist, mindestens eine neue Initiierungsnachricht für einen Voice-over-IP-Anruf zu senden, welche die öffentliche Telefonidentität umfasst, wobei das Endgerät ferner ein Authentifizierungsmodul umfasst, das dazu ausgestaltet ist, sich bei dem Voice-over-IP-Netzwerk unter Verwendung des Authentifizierungsdatenelements zu authentifizieren.

14. Kommunikationssystem (1), umfassend:
- mindestens ein Voice-over-IP-Endgerät (2) nach Anspruch 13; und
- eine Vorrichtung (7) eines Voice-over-IP-Netzwerks nach Anspruch 11 oder 12, die geeignet ist, von dem mindestens einen Endgerät (2) kommende Initiierungsnachrichten für einen Anruf über das Voice-over-IP-Netzwerk zu verarbeiten.

## Claims

1. Method for processing messages by means of a device of a voice-over-IP network (3) of an operator, comprising, following receipt of an initiation message (M1, M2) initiating a voice-over-IP call from a voice-over-IP terminal (2):
- a step of determining (E30, E190) whether the received message contains a public telephone identity allocated to a user of the terminal (2) by the operator of the voice-over-IP network;
- if the message contains a said public telephone identity, a step of triggering (E220) set-up of the voice-over-IP call with an intended recipient of the received message following positive authentication of the terminal;
- otherwise:
∘ a step of setting up (E50) a voice-over-IP channel between the terminal (2) and a voice server (14) hosted by the device of the voice-over-IP network;
∘ a step of obtaining (E70), by means of the voice server, via this channel, an authentication code (AUTH3) of the user of the terminal (2);
∘ if the obtained authentication code is associated in the voice-over-IP network with a public telephone identity (IDPub3) allocated by the operator of the voice-over-IP network to the user of the terminal (2), a step of supplying (E130) to the terminal (2) said public telephone identity (IDPub3) and an authentication datum (DATA3) associated in the voice-over-IP network with this public telephone identity with a view to making voice-over-IP calls and being authenticated by the voice-over-IP network.

2. Processing method according to Claim 1, wherein the authentication (E120) of the terminal prior to the triggering step comprises a step of requesting that the terminal be supplied with a proof of knowledge of an authentication datum associated in the voice-over-IP network with the public telephone identity contained in the received message.

3. Processing method according to Claim 1 or 2, wherein, in the determining step, the device determines that the received initiation message does not contain a public telephone identity allocated to the user of the terminal (2) by the operator of the voice-over-IP network if it detects the presence, in the received initiation message, of a predetermined telephone identity (IDFIX) communicated to the terminal (2) in a prior phase of configuration of the terminal (2).

4. Processing method according to any of Claims 1 to 3, further comprising, if the obtained authentication code is associated, in the voice-over-IP network, with a public telephone identity allocated by the operator of the voice-over-IP network to the user of the terminal (2), a step for triggering set-up of a voice-over-IP call with an intended recipient of the initiation message received from the terminal.

5. Processing method according to Claim 4, wherein the step of triggering set-up of a voice-over-IP call comprises a step of renegotiating with the terminal a voice channel to set up the call.

6. Processing method according to any of Claims 1 to 5, wherein the call initiation message (M1, M2) is a message according to the SIP (Session Initiation Protocol).

7. Processing method according to any of Claims 1 to 6, wherein, in the supplying step, the public telephone identity and the authentication datum are supplied to the terminal in a secure manner.

8. Method of communication by a voice-over-IP terminal (2), comprising:
- a step of sending (E10) an initiation message (M1) for initiating a voice-over-IP call, containing a predetermined telephone identity with which the terminal has been previously configured;
- a step of setting up (E50) a voice-over-IP channel with a voice server (14) hosted by a device of a voice-over-IP network of an operator;
- a step of supplying (E70), via this channel, to the voice server, an authentication code of a user of the terminal;
- a step of receiving (E130), from the device of the voice-over-IP network, a public telephone identity allocated by the operator of the voice-over-IP network to the user of the terminal and associated in the voice-over-IP network with said supplied authentication code, and an authentication datum associated in the voice-over-IP network with this public telephone identity; and
- a step of sending (E170) at least one new initiation message (M2) for initiating a voice-over-IP call containing said public telephone identity and a step of authentication by the voice-over-IP network using the authentication datum.

9. Computer program (PROG7, PROG2) comprising instructions for executing the steps of the processing method according to any one of Claims 1 to 7 or of the communication method according to Claim 8 when said program is executed by a computer.

10. Computer-readable storage medium (16) on which a computer program according to Claim 9 is stored.

11. Device (7) for a voice-over-IP network (3) hosting a voice server (14) and comprising modules that are activated on receipt, by the device, from a voice-over-IP terminal (2), of an initiation message initiating a voice-over-IP call, said modules comprising:
- a determining module (7B) configured to determine whether the received message contains a public telephone identity allocated to a user of the terminal (2) by the operator of the voice-over-IP network;
- a triggering module (7C) configured to trigger set-up of the voice-over-IP call with an intended recipient of the received message if the determining module determines that the received message contains a said public telephone identity;
- and modules that are activated otherwise, comprising:
∘ a setting-up module (7D), configured to set up a voice-over-IP channel between the terminal and the voice server (14);
∘ an obtaining module (7E), configured to obtain, via this channel, an authentication code (AUTH3) of the user of the terminal; and
∘ a supplying module, which is activated if the obtained authentication code is associated in the voice-over-IP network with a public telephone identity allocated by the operator of the voice-over-IP network to the user of the terminal (2), and which is configured to supply to the terminal said public telephone identity (IDPub3) and an authentication datum associated in the voice-over-IP network with the public telephone identity with a view to making voice-over-IP calls and being authenticated by the voice-over-IP network.

12. Device (7) according to Claim 11, wherein the voice server (14) comprises a speech recognition module and/or a speech synthesis module and/or a chatbot.

13. Voice-over-IP terminal (2) comprising:
- a sending module (2A) configured to send an initiation message for initiating a voice-over-IP call, containing a predetermined telephone identity with which the terminal has been previously configured;
- a setting-up module (2B) configured to set up a voice-over-IP channel with a voice server hosted by a device of a voice-over-IP network of an operator;
- a supplying module (2C), configured to supply, to the voice server, via the set up channel, an authentication code of a user of the terminal;
- a receiving module (2D), able to receive from the device a public telephone identity allocated by the operator of the voice-over-IP network to the user of the terminal and associated in the voice-over-IP network with the authentication code supplied by the supplying module, and an authentication datum associated with the public telephone identity in the voice-over-IP network;
and wherein the sending module (2A) is configured to send at least one new initiation message for initiating a voice-over-IP call containing said public telephone identity, said terminal further comprising an authenticating module, configured to be authenticated by the voice-over-IP network using the authentication datum.

14. Communication system (1), comprising:
- at least one voice-over-IP terminal (2) according to Claim 13; and
- a device (7) of a voice-over-IP network according to Claim 11 or 12 able to process initiation messages for initiating calls on the voice-over-IP network originating from said at least one terminal (2).
